# EUROPEAN PATENT SPECIFICATION

(11) **EP 3 258 418 B1**
(45) Date of publication and mention of the grant of the patent: **07.11.2018**
(21) Application number: 17160430.9
(22) Date of filing: 10.03.2017
(51) Int. Cl.: G06K 9/00, G06K 9/03

(54) **FINGERPRINT ENTRY PROMPTING METHOD AND DEVICE**
VERFAHREN UND VORRICHTUNG ZUR FINGERABDRUCKEINGABEAUFFORDERUNG
DISPOSITIF ET PROCÉDÉ D'INVITE D'ENTRÉE D'EMPREINTES DIGITALES

(30) Priority: 17.06.2016 CN 201610440425
(43) Date of publication of application: 20.12.2017
(73) Proprietor: Beijing Xiaomi Mobile Software Co., Ltd., Beijing 100085 (CN)
(72) Inventor: JIANG, Zhongsheng, BEIJING, 100085 (CN); JI, Chuanshun, BEIJING, 100085 (CN); WANG, Gang, BEIJING, 100085 (CN)
(74) Representative: Fontenelle, Sandrine

(56) References cited:
- KR-A- 20160 018 318
- US-A1- 2014 003 677
- US-B1- 6 546 122

## Description

### TECHNICAL FIELD

The present disclosure generally relates to the field of pattern recognition technologies, and more particularly, to a fingerprint entry prompting method and device.

### BACKGROUND

With the constant development of fingerprint recognition technologies, more terminal devices support a fingerprint recognition function. A user needs to enter a fingerprint template before using a terminal device with the fingerprint recognition function.

Limited by the size of the terminal device, the terminal device generally has a fingerprint collecting unit of a relatively small size, which can collect only a part of the fingerprint of the user each time. To increase the recognition accuracy, generally the terminal device, when collecting a fingerprint template of a finger of the user, will repeatedly instruct the user to enter the fingerprint image by means of the fingerprint collecting unit, until the terminal device has collected fingerprint images of all different parts of the finger. However, in this process, the user does not know the parts of which the fingerprint images have not been collected by the terminal device.

### SUMMARY

Embodiments of the present disclosure provide a fingerprint entry prompting method and device. The technical solutions defined by the appended claims.

It will be appreciated that the above general description and the following detailed description are merely exemplary and illustrative, and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart of a fingerprint entry prompting method, according to an exemplary embodiment.
FIG. 2 is a flow chart of a fingerprint entry prompting method, according to an exemplary embodiment.
FIG. 3 is a flow chart of a fingerprint entry prompting method, according to an exemplary embodiment.
FIG. 4 is a schematic diagram of a relative distance based on the embodiment shown in FIG. 3.
FIG. 5 is a block diagram of a fingerprint entry prompting device, according to an exemplary embodiment.
FIG. 6 is a block diagram of a fingerprint entry prompting device, according to an exemplary embodiment.
FIG. 7 is a block diagram of a device, according to an exemplary embodiment.

Specific embodiments of the present disclosure are shown by the above drawings, and a more detailed description will be provided hereinafter. These drawings and text description are not for limiting the scope of conceiving the present disclosure in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same reference numbers throughout different drawings represent the same or similar elements, unless otherwise specified. The implementations set forth in the following description of exemplary embodiments do not exhaust all implementations consistent with the invention; instead, they are merely examples of devices and methods consistent with aspects related to the present disclosure as recited in the appended claims.

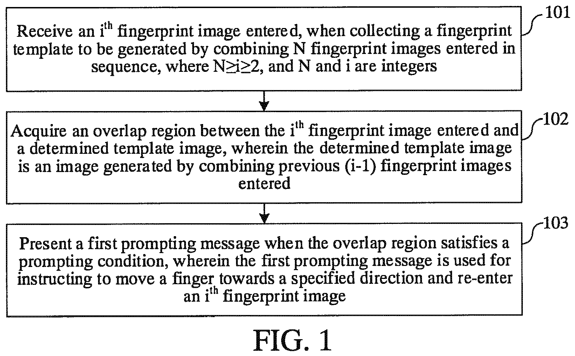

FIG. 1 is a flow chart of a fingerprint entry prompting method, according to an exemplary embodiment. The fingerprint entry prompting method may be applied to a terminal device having a fingerprint recognition function. For example, the terminal device may be a smart phone, a tablet, an e-book reader, a smart wearable device, and the like. The fingerprint entry prompting method may include the following steps.

In step 101, an i^{th} fingerprint image entered is received, when collecting a fingerprint template to be generated by combining N fingerprint images entered in sequence, where N>i>2, and N and i are integers.

In step 102, an overlap region between the i^{th} fingerprint image entered and a determined template image is acquired, wherein the determined template image is an image generated by combining previous (i-1) fingerprint images entered.

In step 103, a first prompting message is presented when the overlap region satisfies a prompting condition, wherein the first prompting message is used for instructing to move a finger towards a specified direction and re-enter an i^{th} fingerprint image.

Based on the above, according to the fingerprint entry prompting method provided in this embodiment of the present disclosure, an i^{th} fingerprint image entered is received when collecting a fingerprint template to be generated by combining N fingerprint images entered in sequence, where N≥i≥2, and N and i are integers; an overlap region between the i^{th} fingerprint image entered and a determined template image is acquired, wherein the determined template image is an image generated by combining previous (i-1) fingerprint images entered; and a first prompting message is presented when the overlap region satisfies a prompting condition, wherein the first prompting message is used for instructing to move a finger towards a specified direction and re-enter an i^{th} fingerprint image. In this way, prompt information for instructing a user to move his/her finger can be provided during the collection of a fingerprint template of the user, making it more efficient for the user to move the finger and re-enter fingerprints of the parts of which fingerprints have not been collected by the terminal device.

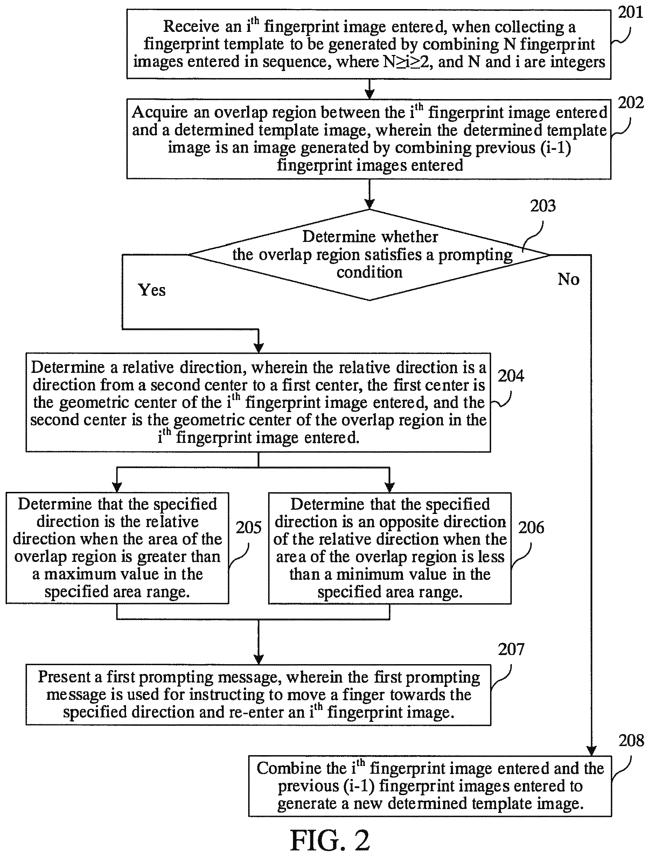

FIG. 2 is a flow chart of a fingerprint entry prompting method, according to an exemplary embodiment. The fingerprint entry prompting method may be applied to a terminal device having a fingerprint recognition function. For example, the terminal device may be a smart phone, a tablet, an e-book reader, a smart wearable device, and the like. The fingerprint entry prompting method may include the following steps.

In step 201, an i^{th} fingerprint image entered is received, when collecting a fingerprint template to be generated by combining N fingerprint images entered in sequence, where N≥i≥2, and N and i are integers.

When collecting a fingerprint template of a user, the terminal device needs to collect multiple fingerprint images that are entered in sequence, and combine the multiple fingerprint images into a fingerprint template. When collecting a fingerprint template to be generated by combining N fingerprint images entered in sequence, the terminal device receives the i^{th} fingerprint image entered, wherein i represents any other fingerprint image than the first fingerprint image entered.

In step 202, an overlap region between the i^{th} fingerprint image entered and a determined template image is acquired, wherein the determined template image is an image generated by combining previous (i-1) fingerprint images entered.

After the i^{th} fingerprint image entered is acquired, the terminal device performs image recognition on the i^{th} fingerprint image entered and the determined template image, and take, as the overlap region, the part in which the two images have an identical image. That is, the overlap region is an identical-image-part between the i^{th} fingerprint image entered and the determined template image after image recognition.

Methods for the image recognition may include SIFT (Scale Invariant Feature Transform) feature extraction method, image edge extraction method, and the like.

In step 203, it is determined whether the overlap region satisfies a prompting condition, where the prompting condition is that the area of the overlap region is outside a specified area range. If the answer is yes, the method proceeds to step 204; otherwise, the method proceeds to step 208.

The prompting condition is used for setting the i^{th} fingerprint image entered to invalid and prompting the user to re-enter the fingerprint when the fingerprint entered by the user does not satisfy the amount of information required by the fingerprint template. The prompting condition may be that the area of the overlap region is outside a specified area range.

In an embodiment of the present disclosure, the above specified area range may be a fixed area range, or may be an area range that is determined in real time by the terminal device according to the current progress of fingerprint template collection. The terminal device may determine in real time the specified area range in the following manner:
1) The terminal device acquires the area of the determined template image.
   The area of an image refers to the value of the physical size of the image in a two-dimensional plane. In an embodiment of the present disclosure, the area of the determined template image may be acquired by using an image recognition and analysis method. For example, the determined template image is placed in a preset coordinate plane that includes a plurality of coordinate blocks of a fixed size (for example, the area of each coordinate block is 1 mm * 1 mm); then, the terminal device performs image recognition on the coordinate plane in which the determined template image is placed, counts the number of coordinate blocks covered by the determined template image according to the recognition result, and obtains the area of the determined template image according to the counted number of coordinate blocks.
   In addition, the size of the fingerprint collection panel in the terminal device is generally known, that is, the size of each fingerprint image collected by the terminal device is known (the same as the size of the fingerprint collection panel), and the determined template image is obtained by combining the fingerprint images that have been successfully collected. Therefore, the terminal device can calculate the area of the determined template image according to the area of each fingerprint image collected.
2) the specified area range is determined according to the area of the determined template image.

As the number of valid fingerprints collected by the terminal device increases, the area of the determined template also increases. The specified area range varies with different areas of the determined template, and the specified area range corresponding to each of the determined template images is a fixed range. In an embodiment, the specified area range may be in positive correlation with the area of the determined template image.

In step 204, a relative direction is determined, wherein the relative direction is a direction from a second center to a first center, the first center is the geometric center of the i^{th} fingerprint image entered, and the second center is the geometric center of the overlap region in the i^{th} fingerprint image entered.

In an embodiment of the present disclosure, the terminal device may determine the relative direction by analyzing the i^{th} fingerprint image entered and the relative position of the above overlap region in the i^{th} fingerprint image.

In an embodiment, the determined relative direction may be an indication of a direction type, for example, an indication defining a direction chosen among a set of predefined directions such as an indication of a direction chosen between two predefined directions: up and down, or left and right; an indication defining a direction chosen between four predefined directions: up, down, left, and right; or an indication of defining a direction chosen between eight predefined directions: up, upper left, upper right, down, lower left, lower right, left, and right; etc.

In another embodiment, the determined relative direction may be a specific direction provided by a parameter such as an angle. The angle may be expressed in the unit of degrees, minutes, seconds, or radian, for example, deviation of 30° to the bottom right with respect to the vertical direction.

In step 205, it is determined that the specified direction is the relative direction, when the area of the overlap region is greater than a maximum value in the specified area range.

When the area of the overlap region is greater than the maximum value in the specified area range, the area of the identical region between the i^{th} fingerprint image entered and the determined template image is excessively large. Intuitively, it may be considered that the overlap part between the i^{th} fingerprint image entered and the determined template image is excessively large, and the relative direction is a direction from the second center to the first center. After the finger moves according to the relative direction, the identical region between the finger and the determined template image decreases, and fingerprint information of a larger part, for which fingerprints have not yet been entered, on the finger can be provided for the template image.

In step 206, it is determined that the specified direction is an opposite direction of the relative direction, when the area of the overlap region is less than a minimum value in the specified area range.

When the area of the overlap region is less than the minimum value in the specified area range, the area of the identical region between the i^{th} fingerprint image entered and the determined template image is excessively small. Intuitively, it may be considered that the overlap part between the i^{th} fingerprint image entered and the determined template image is excessively small, and the specified direction is opposite to the direction from the second center to the first center. After the finger moves according to the specified direction, the identical region between the finger and the determined template image increases, and a larger overlap region between the finger and the determined template image can be provided for the template image, so that the increased overlap area falls within the specified area range.

In step 207, a first prompting message is presented, where the first prompting message is used for instructing to move the finger towards the specified direction and re-enter an i^{th} fingerprint image.

In step 208, the i^{th} fingerprint image entered and the previous (i-1) fingerprint images entered are combined to generate a new determined template image.

The overlap region not satisfying the prompting condition indicates that the i^{th} fingerprint image entered satisfies a condition for combining with the previous (i-1) fingerprint images entered, and the terminal device combines the i^{th} fingerprint image entered with the previous (i-1) fingerprint images entered, i.e. with the above determined template image to generate a new determined template image. The original (or previous) determined template image is deleted, and only the new determined template image is kept.

After obtaining the new determined template image, the terminal device may further detect the numerical relationship between i and N. When i=N, the new determined template image is the final collected fingerprint template.

Based on the above, according to the fingerprint entry prompting method provided in this embodiment of the present disclosure, an i^{th} fingerprint image entered is received when collecting a fingerprint template to be generated by combining N fingerprint images entered in sequence, where N≥i≥2, and N and i are integers; an overlap region between the i^{th} fingerprint image entered and a determined template image is acquired, wherein the determined template image is an image generated by combining previous (i-1) fingerprint images entered; it is determined whether the overlap region satisfies a prompting condition that the area of the overlap region is outside a specified area range; the area of the determined template image is acquired when the overlap region satisfies the prompting condition; the specified area range is determined according to the area of the determined template image, and a relative direction is determined; it is determined that the specified direction is the relative direction when the area of the overlap region is greater than a maximum value in the specified area range, and it is determined that the specified direction is an opposite direction of the relative direction when the area of the overlap region is less than a minimum value in the specified area range; the first prompting message is presented; the i^{th} fingerprint image entered and the previous (i-1) fingerprint images entered are combined to generate a new determined template image, when the overlap region does not satisfy the prompting condition. In this way, prompt information for instructing a user to move his/her finger can be provided during the collection of a fingerprint template of the user, making it more efficient for the user to move the finger and re-enter fingerprints of the parts of which fingerprints have not been collected by the terminal device.

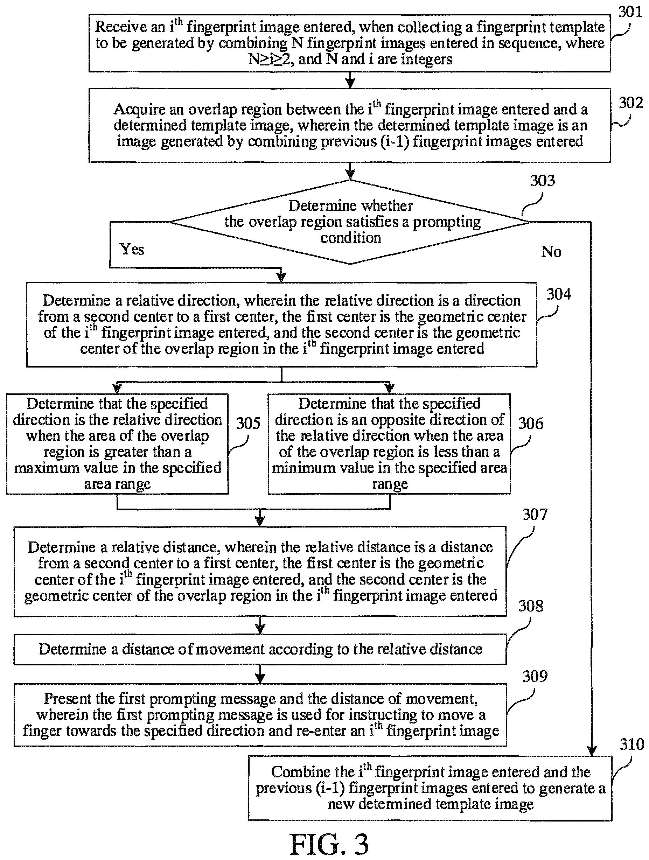

FIG. 3 is a flow chart of a fingerprint entry prompting method, according to an exemplary embodiment. The fingerprint entry prompting method may be applied to a terminal device having a fingerprint recognition function. For example, the terminal device may be a smart phone, a tablet, an e-book reader, a smart wearable device, and the like. The fingerprint entry prompting method may include the following steps.

In step 301, an i^{th} fingerprint image entered is received, when collecting a fingerprint template to be generated by combining N fingerprint images entered in sequence, where N≥i≥2, and N and i are integers.

In step 302, an overlap region between the i^{th} fingerprint image entered and a determined template image is acquired, wherein the determined template image is an image generated by combining previous (i-1) fingerprint images entered.

In step 303, it is determined whether the overlap region satisfies a prompting condition, where the prompting condition is that the area of the overlap region is outside a specified area range. If the answer is yes, the method proceeds to step 304; otherwise, the method proceeds to step 310.

In step 304, a relative direction is determined, wherein the relative direction is a direction from a second center to a first center, the first center is the geometric center of the i^{th} fingerprint image entered, and the second center is the geometric center of the overlap region in the i^{th} fingerprint image entered.

In step 305, it is determined that the specified direction is the relative direction, when the area of the overlap region is greater than a maximum value in the specified area range

In step 306, it is determined that the specified direction is an opposite direction of the relative direction, when the area of the overlap region is less than a minimum value in the specified area range.

The specific execution processes of step 301 to step 306 may be obtained by referring to the description of step 201 to step 206 in the embodiment corresponding to FIG. 2, and the details will not be repeatedly described here.

In step 307, a relative distance is determined as a distance of a first center relative to a second center, where the first center is the geometric center of the i^{th} fingerprint image entered, and the second center is the geometric center of the overlap region in the i^{th} fingerprint image entered.

In determining the relative distance, first, the respective positions of the first center and the second center are determined; then, a relative distance between the first center and the second center is obtained by means of image recognition. The relative distance is the relative distance determined in step 307.

In step 308, a distance of movement is determined according to the relative distance.

In an actual application, the distance of movement is in positive correlation with the relative distance. The determined relative distance may be an accurate distance measured in a unit, or may be a relative distance with respect to a reference object.

When the determined relative distance is an accurate distance measured in a unit, the unit of the accurate distance may be millimeter or centimeter in consideration of the size of a finger. In another embodiment, the unit of the accurate distance may be nanometer, decimeter, meter, and the like.

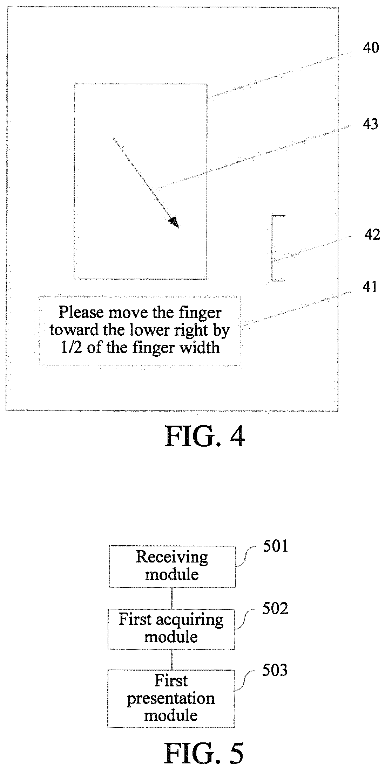

When the determined relative distance is a relative distance with respect to a reference object, the reference object may be a finger of the user. For example, the user is instructed to move by a distance of 1/2 of one finger, a distance of 1/3 of one finger, a distance of 1/4 of one finger, or the like. In another embodiment, the reference object may be a reference scale as shown in FIG. 4. The reference scale may be provided without denoting the actual distance, but instead use a line segment to represent the actual distance of movement required.

Referring to FIG. 4, FIG. 4 is a schematic diagram of a relative distance based on the embodiment shown in FIG. 3. FIG. 4 is displayed on a screen of a terminal device. A collecting region 40 is used for displaying the effective working area of the fingerprint collecting unit. Prompt information 41 is used for prompting the user of the direction and distance of movement, and may display an accurate distance or display a distance of movement with reference to the finger. A reference scale 42 is used for prompting the user of the length of one reference unit, and in this case, the prompt information 41 may be used for prompting the user of the number of reference units by which the user needs to move. In an embodiment, in FIG. 4 a movement indication segment 43 may be further displayed, and the prompt information 41 instructs the user to move his/her finger according to the movement indication segment 43. The user directly moves his/her finger according to the length and direction indicated by the movement indication segment 43.

It should be noted that steps 307-308 may be performed concurrently with steps 304-306, or steps 307-308 may be performed prior to steps 304-306. The order in which steps 307-308 and steps 304-306 are performed is not limited in this embodiment of the present disclosure.

In step 309, the first prompting message and the distance of movement are presented, wherein the first prompting message is used for instructing to move the finger towards the specified direction and re-enter an i^{th} fingerprint image.

In step 310, the i^{th} fingerprint image entered and the previous (i-1) fingerprint images entered are combined to generate a new determined template image.

Based on the above, according to the fingerprint entry prompting method provided in this embodiment of the present disclosure, an i^{th} fingerprint image entered is received when collecting a fingerprint template to be generated by combining N fingerprint images entered in sequence, where N≥i≥2, and N and i are integers; an overlap region between the i^{th} fingerprint image entered and a determined template image is acquired, wherein the determined template image is an image generated by combining previous (i-1) fingerprint images entered; it is determined whether the overlap region satisfies a prompting condition that the area of the overlap region is outside a specified area range; the area of the determined template image is acquired when the overlap region satisfies the prompting condition; the specified area range is determined according to the area of the determined template image, and the relative direction is determined; it is determined that the specified direction is the relative direction when the area of the overlap region is greater than a maximum value in the specified area range, and it is determined that the specified direction is an opposite direction of the relative direction when the area of the overlap region is less than a minimum value in the specified area range; the relative direction is determined, and the distance of movement is determined according to the relative distance; the distance of movement is presented when presenting the first prompting message; the i^{th} fingerprint image entered and the previous (i-1) fingerprint images entered are combined to generate a new determined template image, when the overlap region does not satisfy the prompting condition. In this way, prompt information for instructing a user to move his/her finger can be provided during the collection of a fingerprint template of the user, making it more efficient for the user to move the finger and re-enter fingerprints of the parts of which fingerprints have not been collected by the terminal device.

The following describes the device embodiments of the present disclosure which can be used to implement the method embodiments of the present disclosure. The details that are not disclosed in the device embodiments of the present disclosure may be had by referring to the method embodiments of the present disclosure.

FIG. 5 is a block diagram of a fingerprint entry prompting device, according to an exemplary embodiment. The fingerprint entry prompting device may be implemented as the entire or part of a terminal device having a fingerprint recognition function by means of software, hardware, or a combination thereof. For example, the terminal device may be a smart phone, a tablet, an e-book reader, a smart wearable device, and the like. The fingerprint entry prompting device may include a receiving module 501, a first acquiring module 502, and a first presentation module 503.

The receiving module 501 is configured to receive an i^{th} fingerprint image entered, when collecting a fingerprint template to be generated by combining N fingerprint images entered in sequence, where N≥i≥2, and N and i are integers.

The first acquiring module 502 is configured to acquire an overlap region between the i^{th} fingerprint image entered and a determined template image, wherein the determined template image is an image generated by combining previous (i-1) fingerprint images entered.

The first presentation module 503 is configured to present a first prompting message when the overlap region satisfies a prompting condition, wherein the first prompting message is used for instructing to move a finger towards a specified direction and re-enter an i^{th} fingerprint image.

Based on the above, the fingerprint entry prompting device provided in this embodiment of the present disclosure receives an i^{th} fingerprint image entered, when collecting a fingerprint template to be generated by combining N fingerprint images entered in sequence, where N≥i≥2, and N and i are integers; acquires an overlap region between the i^{th} fingerprint image entered and a determined template image, wherein the determined template image is an image generated by combining previous (i-1) fingerprint images entered; and presents a first prompting message when the overlap region satisfies a prompting condition, wherein the first prompting message is used for instructing to move a finger towards a specified direction and re-enter an i^{th} fingerprint image. In this way, prompt information for instructing a user to move his/her finger can be provided during the collection of a fingerprint template of the user, making it more efficient for the user to move the finger and re-enter fingerprints of the parts of which fingerprints have not been collected by the terminal device.

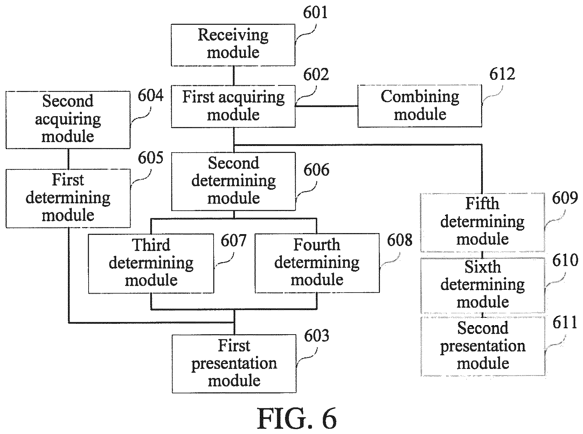

FIG. 6 is a block diagram of a fingerprint entry prompting device, according to an exemplary embodiment. The fingerprint entry prompting device may be implemented as the entire or part of a terminal device having a fingerprint recognition function by means of software, hardware, or a combination thereof. For example, the terminal device may be a smart phone, a tablet, an e-book reader, a smart wearable device, and the like. The fingerprint entry prompting device may include a receiving module 601, a first acquiring module 602, and a first presentation module 603.

The receiving module 601 is configured to receive an i^{th} fingerprint image entered, when collecting a fingerprint template to be generated by combining N fingerprint images entered in sequence, where N≥i≥2, and N and i are integers.

The first acquiring module 602 is configured to acquire an overlap region between the i^{th} fingerprint image entered and a determined template image, wherein the determined template image is an image generated by combining previous (i-1) fingerprint images entered.

The first presentation module 603 is configured to present a first prompting message when the overlap region satisfies a prompting condition, wherein the first prompting message is used for instructing to move a finger towards a specified direction and re-enter an i^{th} fingerprint image.

In an embodiment, in the device, the prompting condition includes: the area of the overlap region is outside a specified area range.

In an embodiment, the device further includes: a second acquiring module 604 and a first determining module 605.

The second acquiring module 604 is configured to acquire the area of the determined template image before the first presentation module 603 presents the first prompting message, when the overlap region satisfies the prompting condition.

The first determining module 605 is configured to determine the specified area range according to the area of the determined template image.

In an embodiment, the device further includes a second determining module 606, a third determining module 607, and a fourth determining module 608.

The second determining module 606 is configured to determine a relative direction before the first presentation module 603 presents the first prompting message when the overlap region satisfies the prompting condition, wherein the relative direction is a direction from a second center to a first center, the first center is the geometric center of the i^{th} fingerprint image entered, and the second center is the geometric center of the overlap region in the i^{th} fingerprint image entered.

The third determining module 607 is configured to determine that the specified direction is the relative direction when the area of the overlap region is greater than a maximum value in the specified area range.

The fourth determining module 608 is configured to determining that the specified direction is an opposite direction of the relative direction when the area of the overlap region is less than a minimum value in the specified area range.

In an embodiment, the device further includes a fifth determining module 609, a sixth determining module 610, and a second presentation module 611.

The fifth determining module 609 is configured to determine a relative distance when the overlap region satisfies the prompting condition, wherein the relative distance is a distance from a second center to a first center, the first center is the geometric center of the i^{th} fingerprint image entered, and the second center is the geometric center of the overlap region in the i^{th} fingerprint image entered.

The sixth determining module 610 is configured to determine a distance of movement according to the relative distance.

The second presentation module 611 is configured to present the distance of movement when presenting the first prompting message.

In an embodiment, the device further includes: a combining module 612.

The combining module 612 is configured to combine the i^{th} fingerprint image entered and the previous (i-1) fingerprint images entered to generate a new determined template image, when the overlap region does not satisfy the prompting condition.

Based on the above, the fingerprint entry prompting device provided in this embodiment of the present disclosure receives an i^{th} fingerprint image entered, when collecting a fingerprint template to be generated by combining N fingerprint images entered in sequence, where N≥i≥2, and N and i are integers; acquires an overlap region between the i^{th} fingerprint image entered and a determined template image, wherein the determined template image is an image generated by combining previous (i-1) fingerprint images entered; determines whether the overlap region satisfies a prompting condition that the area of the overlap region is outside a specified area range; acquires the area of the determined template image when the overlap region satisfies the prompting condition; determines the specified area range according to the area of the determined template image and determines a relative direction; determines that the specified direction is the relative direction when the area of the overlap region is greater than a maximum value in the specified area range, and determines that the specified direction is an opposite direction of the relative direction when the area of the overlap region is less than a minimum value in the specified area range; determines a relative distance and determines a distance of movement according to the relative distance; presents the distance of movement when presenting the first prompting message; combines the i^{th} fingerprint image entered and the previous (i-1) fingerprint images entered to generate a new determined template image, when the overlap region does not satisfy the prompting condition. In this way, prompt information for instructing a user to move his/her finger can be provided during the collection of a fingerprint template of the user, making it more efficient for the user to move the finger and re-enter fingerprints of the parts of which fingerprints have not been collected by the terminal device.

An exemplary embodiment of the present disclosure further provides a fingerprint entry prompting device which can implement the fingerprint entry prompting method provided in the above embodiments of the present disclosure. The device includes a processor and a memory for storing instructions executable by the processor.

The processor is configured to:
receive an i^{th} fingerprint image entered, when collecting a fingerprint template to be generated by combining N fingerprint images entered in sequence, wherein N≥i≥2, and N and i are integers;
acquire an overlap region between the i^{th} fingerprint image entered and a determined template image, wherein the determined template image is an image generated by combining previous (i-1) fingerprint images entered; and
present a first prompting message when the overlap region satisfies a prompting condition, wherein the first prompting message is used for instructing to move a finger towards a specified direction and re-enter an i^{th} fingerprint image.

In an embodiment, the prompting condition includes:
the area of the overlap region is outside a specified area range.

In an embodiment, the method may further include:
acquiring the area of the determined template image before presenting the first prompting message, when the overlap region satisfies the prompting condition; and
determining the specified area range according to the area of the determined template image.

In an embodiment, the method may further include:
determining a relative direction before presenting the first prompting message when the overlap region satisfies the prompting condition, wherein the relative direction is a direction from a second center to a first center, the first center is the geometric center of the i^{th} fingerprint image entered, and the second center is the geometric center of the overlap region in the i^{th} fingerprint image entered;
determining that the specified direction is the relative direction, when the area of the overlap region is greater than a maximum value in the specified area range; and
determining that the specified direction is an opposite direction of the relative direction, when the area of the overlap region is less than a minimum value in the specified area range.

In an embodiment, the method may further include:
determining a relative distance when the overlap region satisfies a prompting condition, wherein the relative distance is a distance from a second center to a first center, the first center is the geometric center of the i^{th} fingerprint image entered, and the second center is the geometric center of the overlap region in the i^{th} fingerprint image entered;
determining a distance of movement according to the relative distance; and
presenting the distance of movement when presenting the first prompting message.

In an embodiment, the method may further include:
combining the i^{th} fingerprint image entered and the previous (i-1) fingerprint images entered to generate a new determined template image, when the overlap region does not satisfy the prompting condition.

With respect to the devices in the above embodiments, the specific manners for performing operations for individual modules therein have been described in detail in the embodiments regarding the methods, and will not be elaborated herein.

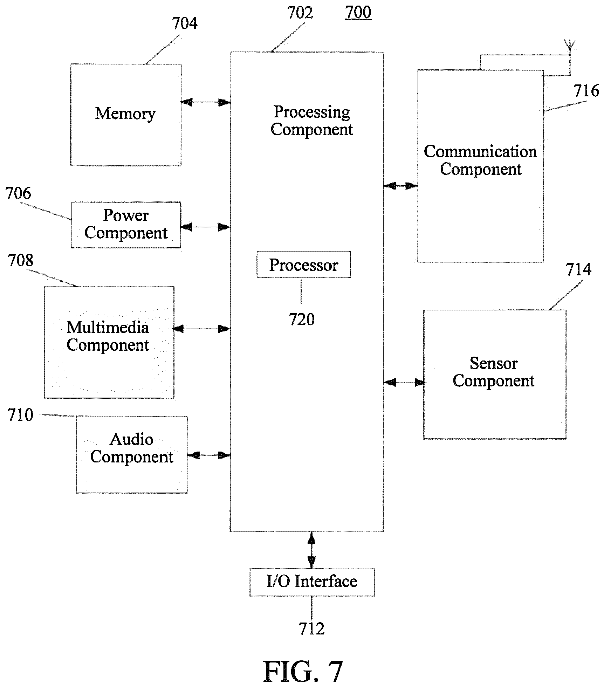

FIG. 7 is a block diagram of a device 700, according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive an external multimedia datum while the device 700 is in an operation mode, such as a photographing mode or a video mode. Each of the front camera and the rear camera may be a fixed optical lens system or have focus and optical zooming capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wireless, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer-readable storage medium having stored therein instructions that, when executed by the processor in the device 700, cause the device 700 to perform any of the above fingerprint entry prompting methods as shown in FIG. 1 to FIG. 3.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and embodiments be considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A fingerprint entry prompting method, comprising:
receiving (101, 201, 301) an i^{th} fingerprint image entered, when collecting a fingerprint template to be generated by combining N fingerprint images entered in sequence, where N≥i≥2, and N and i are integers;
acquiring (102, 202, 302) an overlap region between the i^{th} fingerprint image entered and a determined template image, wherein the determined template image is an image generated by combining previous i-1 fingerprint images entered;
determining (204, 304) a relative direction, wherein the relative direction is a direction from a second center to a first center, the first center is the geometric center of the i^{th} fingerprint image entered, and the second center is the geometric center of the overlap region in the i^{th} fingerprint image entered; and
presenting (103, 207, 309) a first prompting message (41) when the overlap region satisfies a prompting condition, wherein the first prompting message is used for instructing to move a finger towards a specified direction and re-enter an i^{th} fingerprint image, and wherein the prompting condition comprises that the area of the overlap region is outside a specified area range, and
wherein the specified direction is determined (205, 305) as the relative direction when the area of the overlap region is greater than a maximum value in the specified area range, and is determined (206, 306) as an opposite direction of the relative direction when the area of the overlap region is less than a minimum value in the specified area range.

2. The method according to claim 1, further comprising:
acquiring the area of the determined template image before presenting the first prompting message when the overlap region satisfies the prompting condition; and
determining the specified area range based on the area of the determined template image.

3. The method according to claim 1, further comprising:
determining (307) a relative distance when the overlap region satisfies the prompting condition, wherein the relative distance is a distance from the second center to the first center;
determining (308) a distance of movement according to the relative distance; and
presenting (309) the distance of movement when presenting the first prompting message.

4. The method according to any of claims 1 to 3, further comprising:
combining (208, 310) the i^{th} fingerprint image entered and the previous i-1 fingerprint images entered to generate a new determined template image, when the overlap region does not satisfy the prompting condition.

5. A fingerprint entry prompting device, comprising:
a receiving module (501, 601), configured to receive an i^{th} fingerprint image entered, when collecting a fingerprint template to be generated by combining N fingerprint images entered in sequence, where N≥i≥2, and N and i are integers;
a first acquiring module (502, 602), configured to acquire an overlap region between the i^{th} fingerprint image entered and a determined template image, wherein the determined template image is an image generated by combining previous i-1 fingerprint images entered;
a second determining module (606), configured to determine a relative direction, wherein the relative direction is a direction from a second center to a first center, the first center is the geometric center of the i^{th} fingerprint image entered, and the second center is the geometric center of the overlap region in the i^{th} fingerprint image entered;
a first presentation module (503, 603), configured to present a first prompting message (41) when the overlap region satisfies a prompting condition, wherein the first prompting message is used for instructing to move a finger towards a specified direction and re-enter an i^{th} fingerprint image, and wherein the prompting condition comprises that the area of the overlap region is outside a specified area range;
a third determining module (607), configured to determine that the specified direction is the relative direction when the area of the overlap region is greater than a maximum value in the specified area range; and
a fourth determining module (608), configured to determine that the specified direction is an opposite direction of the relative direction when the area of the overlap region is less than a minimum value in the specified area range.

6. The device according to claim 5, further comprising:
a second acquiring module (604), configured to acquire the area of the determined template image before presenting the first prompting message when the overlap region satisfies the prompting condition; and
a first determining module (605), configured to determine the specified area range based on the area of the determined template image.

7. The device according to claim 5, further comprising:
a fifth determining module (609), configured to determine a relative distance when the overlap region satisfies the prompting condition, wherein the relative distance is a distance from the second center to the first center;
a sixth determining module (610), configured to determine a distance of movement according to the relative distance; and
a second presentation module (611), configured to present the distance of movement when presenting the first prompting message.

8. The device according to any of claims 5 to 7, further comprising:
a combining module (612), configured to combine the i^{th} fingerprint image entered and the previous i-1 fingerprint images entered to generate a new determined template image, when the overlap region does not satisfy the prompting condition.

9. A computer-readable storage medium (704) comprising instructions which, when executed by a processor (720) of a fingerprint entry prompting device, cause the processor (720) to perform a fingerprint entry prompting method according to any of claims 1 to 4.

## Patentansprüche

1. Verfahren zur Eingabeaufforderung für Fingerabdrücke, umfassend:
Empfangen (101, 201, 301) eines eingegebenen i-ten Fingerabdruckbildes, wenn eine zu erzeugende Fingerabdruckvorlage durch Kombinieren von N nacheinander eingegebenen Fingerabdruckbildern zusammengetragen wird, wobei N≥i≥2 und N und i ganze Zahlen sind,
Erfassen (102, 202, 302) eines Überlappungsbereichs zwischen dem i-ten eingegebenen Fingerabdruckbild und einem bestimmten Vorlagenbild, wobei das bestimmte Vorlagenbild ein Bild ist, das durch Kombinieren der vorherigen eingegebenen i-1 Fingerabdruckbilder erzeugt wird,
Bestimmen (204, 304) einer relativen Richtung, wobei die relative Richtung eine Richtung von einem zweiten Mittelpunkt zu einem ersten Mittelpunkt ist, wobei der erste Mittelpunkt der geometrische Mittelpunkt des i-ten eingegebenen Fingerabdruckbildes ist und der zweite Mittelpunkt der geometrische Mittelpunkt des Überlappungsbereichs in dem i-ten eingegebenen Fingerabdruckbild ist, und
Darstellen (103, 207, 309) einer ersten Aufforderungsmeldung (41), wenn der Überlappungsbereich eine Aufforderungsbedingung erfüllt, wobei die erste Aufforderungsmeldung verwendet wird, um anzuweisen, einen Finger in eine vorgegebene Richtung zu bewegen und ein i-tes Fingerabdruckbild erneut einzugeben, und wobei die Aufforderungsbedingung umfasst, dass die Fläche des Überlappungsbereichs außerhalb eines vorgegebenen Flächenbereichs liegt, und
wobei die vorgegebene Richtung als die relative Richtung bestimmt wird (205, 305), wenn die Fläche des Überlappungsbereichs größer als ein Maximalwert in dem vorgegebenen Flächenbereich ist, und als eine entgegengesetzte Richtung der relativen Richtung bestimmt wird (206, 306), wenn die Fläche des Überlappungsbereichs kleiner als ein Minimalwert in dem vorgegebenen Flächenbereich ist.

2. Verfahren nach Anspruch 1, ferner umfassend:
Erfassen der Fläche des bestimmten Vorlagenbildes, bevor die erste Aufforderungsmeldung dargestellt wird, wenn der Überlappungsbereich die Aufforderungsbedingung erfüllt, und
Bestimmen des vorgegebenen Flächenbereichs auf der Grundlage der Fläche des bestimmten Vorlagenbildes.

3. Verfahren nach Anspruch 1, ferner umfassend:
Bestimmen (307) eines relativen Abstands, wenn der Überlappungsbereich die Aufforderungsbedingung erfüllt, wobei der relative Abstand ein Abstand von dem zweiten Mittelpunkt zu dem ersten Mittelpunkt ist,
Bestimmen (308) eines Bewegungsabstands entsprechend dem relativen Abstand, und
Darstellen (309) des Bewegungsabstandes, wenn die erste Aufforderungsmeldung dargestellt wird.

4. Verfahren nach einem der Ansprüche 1 bis 3, ferner umfassend:
Kombinieren (208, 310) des i-ten eingegebenen Fingerabdruckbildes und der vorherigen i-1 eingegebenen Fingerabdruckbilder, um ein neu bestimmtes Vorlagenbild zu erzeugen, wenn der Überlappungsbereich die Aufforderungsbedingung nicht erfüllt.

5. Vorrichtung zur Eingabeaufforderung für Fingerabdrücke, umfassend:
ein Empfangsmodul (501, 601), das so konfiguriert ist, dass es ein i-tes eingegebenes Fingerabdruckbild empfängt, wenn eine zu erzeugende Fingerabdruckvorlage durch Kombinieren von N nacheinander eingegebenen Fingerabdruckbildern zusammengetragen wird, wobei N≥i≥2 und N und i ganze Zahlen sind,
ein erstes Erfassungsmodul (502, 602), das so konfiguriert ist, dass es einen Überlappungsbereich zwischen dem i-ten eingegebenen Fingerabdruckbild und einem bestimmten Vorlagenbild erfasst, wobei das bestimmte Vorlagenbild ein Bild ist, das durch Kombinieren früher eingegebener i-1 Fingerabdruckbilder erzeugt wird,
ein zweites Bestimmungsmodul (606), das so konfiguriert ist, dass es eine relative Richtung bestimmt, wobei die relative Richtung eine Richtung von einem zweiten Mittelpunkt zu einem ersten Mittelpunkt ist, wobei der erste Mittelpunkt der geometrische Mittelpunkt des i-ten eingegebenen Fingerabdruckbildes ist und der zweite Mittelpunkt der geometrische Mittelpunkt des Überlappungsbereichs in dem i-ten eingegebenen Fingerabdruckbild ist,
ein erstes Darstellungsmodul (503, 603), das so konfiguriert ist, dass es eine erste Aufforderungsmeldung (41) darstellt, wenn der Überlappungsbereich eine Aufforderungsbedingung erfüllt, wobei die erste Aufforderungsmeldung verwendet wird, um anzuweisen, einen Finger in eine vorgegebene Richtung zu bewegen und ein i-tes Fingerabdruckbild erneut einzugeben, und wobei die Aufforderungsbedingung umfasst, dass die Fläche des Überlappungsbereichs außerhalb eines vorgegebenen Flächenbereichs liegt,
ein drittes Bestimmungsmodul (607), das konfiguriert ist, um zu bestimmen, dass die vorgegebene Richtung die relative Richtung ist, wenn die Fläche des Überlappungsbereichs größer als ein Maximalwert in dem vorgegebenen Flächenbereich ist, und
ein viertes Bestimmungsmodul (608), das konfiguriert ist, um zu bestimmen, dass die vorgegebene Richtung eine entgegengesetzte Richtung der relativen Richtung ist, wenn die Fläche des Überlappungsbereichs kleiner als ein Minimalwert in dem vorgegebenen Flächenbereich ist.

6. Vorrichtung nach Anspruch 5, ferner umfassend:
ein zweites Erfassungsmodul (604), das so konfiguriert ist, dass es die Fläche des bestimmten Vorlagenbildes erfasst, bevor die erste Aufforderungsmeldung dargestellt wird, wenn der Überlappungsbereich die Aufforderungsbedingung erfüllt, und
ein erstes Bestimmungsmodul (605), das so konfiguriert ist, dass es den vorgegebenen Flächenbereich auf der Grundlage der Fläche des bestimmten Vorlagenbildes bestimmt.

7. Vorrichtung nach Anspruch 5, ferner umfassend:
ein fünftes Bestimmungsmodul (609), das so konfiguriert ist, dass es einen relativen Abstand bestimmt, wenn der Überlappungsbereich die Aufforderungsbedingung erfüllt, wobei der relative Abstand ein Abstand von dem zweiten Mittelpunkt zu dem ersten Mittelpunkt ist,
ein sechstes Bestimmungsmodul (610), das so konfiguriert ist, dass es einen Bewegungsabstand entsprechend dem relativen Abstand bestimmt, und
ein zweites Darstellungsmodul (611), das so konfiguriert ist, dass es den Bewegungsabstand darstellt, wenn die erste Aufforderungsmeldung dargestellt wird.

8. Vorrichtung nach einem der Ansprüche 5 bis 7, ferner umfassend:
ein Kombinationsmodul (612), das so konfiguriert ist, dass es das i-te eingegebene Fingerabdruckbild und die vorherigen i-1 eingegebenen Fingerabdruckbilder kombiniert, um ein neu bestimmtes Vorlagenbild zu erzeugen, wenn der Überlappungsbereich die Aufforderungsbedingung nicht erfüllt.

9. Computerlesbares Speichermedium (704), das Befehle umfasst, die, wenn sie von einem Prozessor (720) einer Fingerabdruck-Eingabeaufforderungsvorrichtung ausgeführt werden, den Prozessor (720) veranlassen, ein Fingerabdruck-Eingabeaufforderungsverfahren gemäß einem der Ansprüche 1 bis 4 durchzuführen.

## Revendications

1. Procédé de demande d'entrée d'empreintes digitales comprenant :
la réception (101, 201, 301) d'une i^{ème} image d'empreinte digitale entrée lors de la collecte d'un modèle d'empreinte digitale à générer en combinant N images d'empreintes digitales entrées dans l'ordre, N ≥ i ≥ 2, N et i étant des entiers ;
l'acquisition (102, 202, 302) d'une région de superposition entre la i^{ème} image d'empreinte digitale entrée et une image modèle déterminée, l'image modèle déterminée étant une image générée en combinant les i-1 images d'empreintes digitales précédentes entrées ;
la détermination (204, 304) d'une direction relative, la direction relative étant une direction d'un deuxième centre vers un premier centre, le premier centre étant le centre géométrique de la i^{ème} image d'empreinte digitale entrée, et le deuxième centre étant le centre géométrique de la région de superposition dans la i^{ème} image d'empreinte digitale entrée ; et
la présentation (103, 207, 309) d'un premier message de demande (41) lorsque la région de superposition satisfait une condition de demande, le premier message de demande étant utilisé pour ordonner le déplacement d'un doigt dans une direction spécifiée et une nouvelle entrée d'une i^{eme} image d'empreinte digitale et la condition de demande comprenant que la superficie de la région de superposition soit à l'extérieur d'une plage de superficies spécifiée et
la direction spécifiée étant déterminée (205, 305) comme la direction relative lorsque la superficie de la région de superposition est supérieure à une valeur maximum dans la plage de superficies spécifiée et étant déterminée (206, 306) comme une direction opposée à la direction relative lorsque la superficie de la région de superposition est inférieure à une valeur minimum dans la plage de superficies spécifiée.

2. Procédé selon la revendication 1, comprenant en outre :
l'acquisition de la superficie de l'image modèle déterminée avant la présentation du premier message de demande lorsque la région de superposition satisfait la condition de demande ; et
la détermination de la plage de superficies spécifiée sur la base de la superficie de l'image modèle déterminée.

3. Procédé selon la revendication 1, comprenant en outre :
la détermination (307) d'une distance relative lorsque la région de superposition satisfait la condition de demande, la distance relative étant une distance entre le deuxième centre et le premier centre ;
la détermination (308) d'une distance de mouvement en fonction de la distance relative ; et
la présentation (309) de la distance de mouvement lors de la présentation du premier message de demande.

4. Procédé selon l'une des revendications 1 à 3, comprenant en outre :
la combinaison (208, 310) de la i^{ème} image d'empreinte digitale entrée et des i-1 images d'empreintes digitales précédentes entrées afin de générer une nouvelle image modèle déterminée lorsque la région de superposition ne satisfait pas la condition de demande.

5. Dispositif de demande d'entrée d'empreintes digitales comprenant :
un module de réception (501, 601) conçu pour recevoir une i^{ème} image d'empreinte digitale entrée lors de la collecte d'un modèle d'empreinte digitale à générer en combinant N images d'empreintes digitales entrées dans l'ordre, N ≥ i ≥ 2, N et i étant des entiers ;
un premier module d'acquisition (502, 602) conçu pour acquérir une région de superposition entre la i^{eme} image d'empreinte digitale entrée et une image modèle déterminée, l'image modèle déterminée étant une image générée en combinant les i-1 images d'empreintes digitales précédentes entrées ;
un deuxième module de détermination (606) conçu pour déterminer une direction relative, la direction relative étant une direction d'un deuxième centre vers un premier centre, le premier centre étant le centre géométrique de la i^{ème} image d'empreinte digitale entrée, et le deuxième centre étant le centre géométrique de la région de superposition dans la i^{ème} image d'empreinte digitale entrée ;
un premier module de présentation (503, 603) conçu pour présenter un premier message de demande (41) lorsque la région de superposition satisfait une condition de demande, le premier message de demande étant utilisé pour ordonner le déplacement d'un doigt dans une direction spécifiée et une nouvelle entrée d'une i^{ème} image d'empreinte digitale et la condition de demande comprenant que la superficie de la région de superposition soit à l'extérieur d'une plage de superficies spécifiée ;
un troisième module de détermination (607) conçu pour déterminer que la direction est la direction relative lorsque la superficie de la région de superposition est supérieure à une valeur maximum dans la plage de superficies spécifiée ; et
un quatrième module de détermination (608) conçu pour déterminer que la direction spécifiée est une direction opposée à la direction relative lorsque la superficie de la région de superposition est inférieure à une valeur minimum dans la plage de superficies spécifiée.

6. Dispositif selon la revendication 5, comprenant en outre :
un deuxième module d'acquisition (604) conçu pour acquérir la superficie de l'image modèle déterminée avant la présentation du premier message de demande lorsque la région de superposition satisfait la condition de demande ; et
un premier module de détermination (605) conçu pour déterminer la plage de superficies spécifiée sur la base de la superficie de l'image modèle déterminée.

7. Dispositif selon la revendication 5, comprenant en outre :
un cinquième module de détermination (609) conçu pour déterminer une distance relative lorsque la région de superposition satisfait la condition de demande, la distance relative étant une distance entre le deuxième centre et le premier centre ;
un sixième module de détermination (610) conçu pour déterminer une distance de mouvement en fonction de la distance relative ; et
un deuxième module de présentation (611) conçu pour présenter la distance de mouvement lors de la présentation du premier message de demande.

8. Dispositif selon l'une des revendications 5 à 7, comprenant en outre :
un module de combinaison (612) conçu pour combiner la i^{ème} image d'empreinte digitale entrée et les i-1 images d'empreintes digitales précédentes entrées afin de générer une nouvelle image modèle déterminée lorsque la région de superposition ne satisfait pas la condition de demande.

9. Support de stockage lisible par un ordinateur (704) comprenant des instructions qui, lorsqu'elles sont exécutées par un processeur (720) d'un dispositif de demande d'entrée d'empreintes digitales, font en sorte que le processeur (720) exécute un procédé de demande d'entrée d'empreintes digitales selon l'une des revendications 1 à 4.
